# EUROPÄISCHE PATENTANMELDUNG

(11) **EP 1 313 204 A1**
(43) Veröffentlichungstag der Anmeldung: **21.05.2003**
(21) Anmeldenummer: 01127593.0
(22) Anmeldetag: 19.11.2001
(51) Int. Cl.: H02M 3/158

(54) **Anordnung zur DC/DC-Wandlung**

(71) Anmelder: SIEMENS AKTIENGESELLSCHAFT, 80333 München (DE)
(72) Erfinder: Hermann, Peter, 89079 Ulm (DE)

(57) **Zusammenfassung**

Die Erfindung betrifft eine Anordnung zur Gleichspannungswandlung einer an einem Eingang anliegenden Eingangsspannung in eine an einem Ausgang anliegende Ausgangsspannung.

Der Eingang liegt einerseits über einen Eingangskondensator und andererseits über eine Serienschaltung eines ersten und eines zweiten Schalters, die an einem gemeinsamen Knotenpunkt miteinander verbunden sind, an einem Referenzpotential an. Die beiden Schalter sind derart ansteuerbar, dass am Knotenpunkt einander abwechselnd entweder die Eingangsspannung oder das Referenzpotential als ein Knotenpunktspotential angeschaltet ist. Dabei ist zwischen dem Knotenpunkt und dem Ausgang ein Tiefpass angeordnet.
Zur Minimierung von Störungen ist am Knotenpunkt zusätzlich eine mit dem Referenzpotential verbundene Entstöreinrichtung angeschaltet.

## Beschreibung

Die Erfindung betrifft eine Anordnung zur Gleichspannungswandlung einer an einem Eingang anliegenden Eingangsspannung in eine an einem Ausgang anliegende Ausgangsspannung.

Moderne Basisstationen für die Mobilkommunikation stellen erhebliche Anforderungen an die Güte von Stromversorgungen bzw. Spannungsversorgungen. Beispielsweise ist das sogenannte Phasenrauschen eines lokalen Oszillators bei einer Basisstation eine bestimmende Größe für deren Übertragungsverhalten. Ein derartiger Oszillator wird typischerweise von einem DC/DC-Wandler (Buck-Converter) mit Spannung bzw. Strom versorgt, die zur Vermeidung von Beeinflussungen des Oszillators möglichst frei von hochfrequenten Störungen sind.

Dabei werden an einen Buck-Converter, der zur Versorgung eines Oszillators dient, systembedingt steigende Anforderungen bezüglich seines Wirkungsgrads, seiner Eingangsspannung und seines Schaltverhaltens gestellt.
Bei einer gewünschten Vergrößerung seiner Eingangsspannung und bei einem Einsatz von niederohmigen Schalttransistoren, die steile Schaltflanken aufweisen, kommt es zu ansteigenden Rückwirkungen im sogenannten Drosselkreis des Buck-Converters, bzw. zu unerwünschten Rückwirkungen auf dessen Ausgangsspannung bzw. Ausgangsstrom. Diese Rückwirkungen gelangen als leitungsgebundene Störungen zum Oszillator und werden gegebenenfalls sogar abgestrahlt.

Durch diese Rückwirkungen verursachte Störungen werden dadurch umgangen, dass bei einem DC/DC-Wandler verwendete Schalttransistoren "sanft" geschaltet werden. Es werden Schalttransistoren mit einem hochohmigen Widerstand R_{DSon} ausgewählt, die eine größere Dämpfung aufweisen. Zusätzlich werden zur Ansteuerung der Schalttransistoren Treiberbausteine mit einer geringeren Flankensteilheit verwendet. Bei einem DC/DC-Wandler mit kleiner Ausgangsleistung ist üblicherweise ein passives RC-Filter vorgesehen, das zur Unterdrückung von Störungen dient.

Die beschriebenen Maßnahmen zur Störungsunterdrückung verursachen jedoch höhere Verluste beim Wirkungsgrad des DC/DC-Wandlers.

Es ist daher Aufgabe der vorliegenden Erfindung, Störungen der Ausgangsspannung bzw. des Ausgangsstromes eines DC/DC-Wandlers derart zu unterdrücken, dass sein Wirkungsgrad erhalten bleibt.

Die Aufgabe der Erfindung wird durch die Merkmale des Anspruchs 1 gelöst. Vorteilhafte Weiterbildungen sind in den Unteransprüchen angegeben.

Das Anwendungsgebiet der erfindungsgemäßen Anordnung erstreckt sich nicht nur auf den Bereich der mobilen Kommunikation, sondern auch auf beliebige andere Bereiche, in denen möglichst störungsfreie, konstante Spannungs- bzw. Stromversorgungen erforderlich sind.

Durch die erfindungsgemäße Anschaltung eines weiteren als Schalttransistor ausgebildeten Schalters und einer einen Widerstand und einen Kondensator beinhaltenden Serienschaltung wird ein am Knotenpunkt anliegendes Knotenpunktspotential durch die gespeicherte Energie des Kondensators der Serienschaltung bereits angehoben, bevor der als Leistungstransistor ausgebildete erste Schalter bzw. der erste Schalttransistor den eigentlichen Laststrom übernimmt.

Dadurch erfolgt eine weitgehende Auslöschung von Spannungsüberhöhungen am Knotenpunkt, wobei diese Auslöschung abhängig vom jeweiligen Kapazitätswert des Kondensators der Serienschaltung und des Laststroms, der durch den Leistungstransistor fließt, ist.

Durch die erfindungsgemäße Anordnung und der zeitlich versetzten, jedoch parallelen Betätigung des ersten Schalters und des erfindungsgemäß am Knotenpunkt angeschalteten weiteren Schalters werden die Störungen am Tiefpasseingang des DC/DC-Wandlers nahezu eliminiert. Die in den Durchschaltphasen der als Transistoren ausgebildeten Schaltern auftretenden kurzen Spannungseinbrüche am Ausgang sind minimal.

Eine Dimensionierung des jeweiligen Widerstandswerts bzw. Kondensatorwerts der erfindungsgemäß am Knotenpunkt angeschalteten Serienschaltung ist empirisch möglich. Dabei ist besonders ein zum Aufbau der Anordnung verwendetes Platinenlayout und der zu schaltende Laststrom (Eingangsstrom) zu berücksichtigen.

Im Folgenden wird ein Ausführungsbeispiel der vorliegenden Erfindung anhand einer Zeichnung erläutert. Dabei zeigt:
- FIG 1: ein Schaltbeispiel eines DC/DC-Wandlers gemäß dem Stand der Technik,
- FIG 2: einen Spannungsverlauf an einem Knotenpunkt des nach FIG 1 ausgebildeten DC/DC-Wandlers,
- FIG 3: ein Schaltbeispiel eines erfindungsgemäßen DC/DC-Wandlers, und
- FIG 4: einen Spannungsverlauf an einem Knotenpunkt des nach FIG 3 ausgebildeten DC/DC-Wandlers.

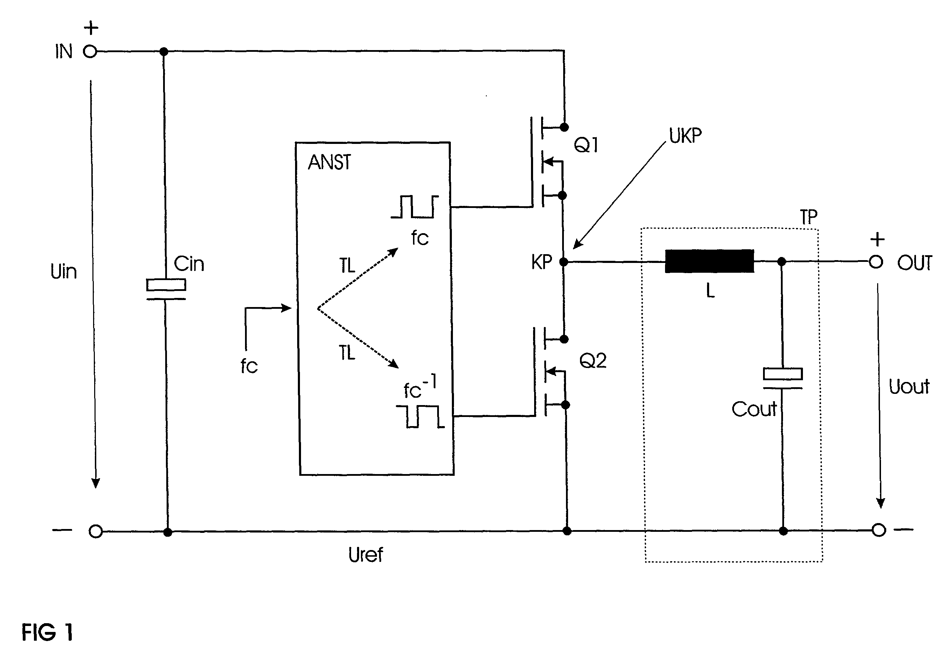

FIG 1 zeigt ein Schaltbeispiel eines DC/DC-Wandlers gemäß dem Stand der Technik, der einen als ersten Transistor Q1 ausgebildeten ersten Schalter, einen als zweiten Transistor Q2 ausgebildeten zweiten Schalter, einen Eingangskondensator Cin, einen Ausgangskondensator Cout und eine Induktivität L aufweist. An einem Eingang IN des DC/DC-Wandlers ist eine auf ein Referenzpotential Uref bezogene Eingangsspannung Uin angeschaltet und an seinem Ausgang OUT liegt eine auf das gleiche Referenzpotential Uref bezogene Ausgangsspannung Uout an.

Im vorliegenden Beispiel werden für die Transistoren Q1, Q2 sogenannte Feldeffekt-Transistoren vom Typ MOSFET verwendet. Der Source-Anschluss des ersten Transistors Q1 ist mit dem Drain-Anschluss des zweiten Transistors Q2 zu einem Knotenpunkt KP verbunden. Dieser Knotenpunkt ist über die Induktivität L mit dem Ausgang OUT verbunden, der seinerseits über den Ausgangskondensator Cout mit dem Referenzpotential Uref verbunden ist. Die Induktivität L als Drossel und der Ausgangskondensator Cout bilden dabei einen Tiefpass TP.

Der Source-Anschluss des zweiten Transistors Q2 ist mit dem Referenzpotential Uref verbunden. Der Drain-Anschluss des ersten Transistors Q1 ist mit dem Eingang IN verbunden. Der Eingang IN ist über den Eingangskondensator Cin mit dem Referenzpotential Uref verbunden.

Zur Ansteuerung des ersten und des zweiten Transistors Q1 und Q2 ist diesen beiden Schalttransistoren eine Ansteuereinrichtung ANST vorgeschaltet, die mittels eines Steuersignals fc getaktet ist und die aus dem Steuersignal fc nach Ablauf einer Signallaufzeit TL Ansteuersignale für die Gate-Anschlüsse der Transistoren Q1 und Q2 erzeugt. Die Ansteuersignale werden dabei derart erzeugt, dass die beiden Schalttransistoren Q1, Q2 einander abwechselnd sperren bzw. durchschalten. Dadurch ist am Knotenpunkt KP wechselweise das Referenzpotential Uref oder die Eingangsspannung Uin als Knotenpunktspotential UKP angeschaltet.

Ergänzend sei hier erwähnt, dass der als zweiter Schalttransistor Q2 ausgebildete zweite Schalter auch als Diode oder als Parallelschaltung einer Diode mit einem Transistor ausführbar ist.

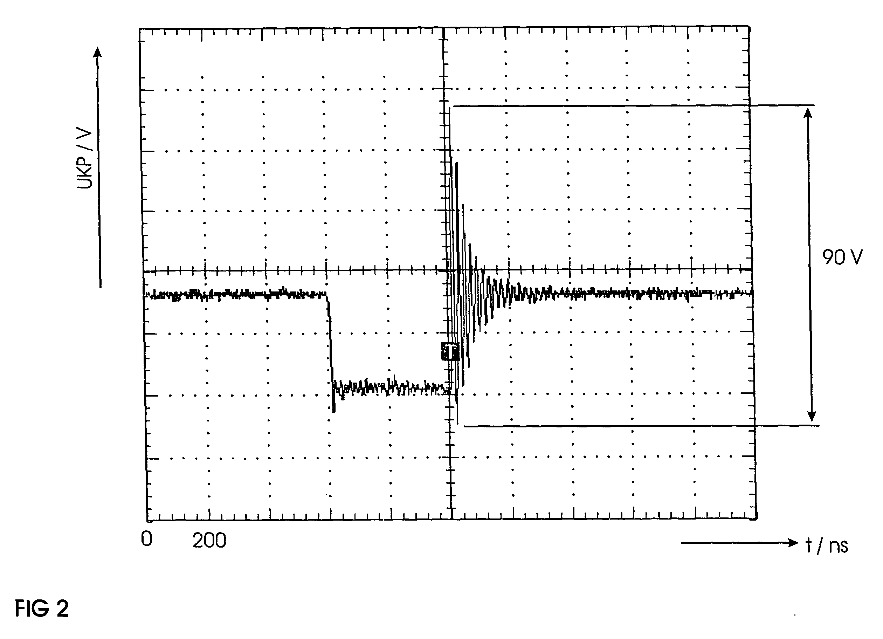

FIG 2 zeigt ein Knotenpunktspotential UKP bzw. einen Spannungsverlauf am Knotenpunkt KP des nach FIG 1 ausgebildeten DC/DC-Wandlers.
Wird der erste Schalttransistor Q1 durchgeschaltet, so zeigt sich am Knotenpunkt KP bei einer Eingangsspannung Uin von beispielsweise lediglich 40 V ein Überschwingen von ca. 90 V.

Dabei wurde ein Laststrom durch den ersten Schalttransistor Q1 von ca. 10% eines geforderten Sollwerts und eine typische Tastfrequenz von ca. 300 kHz vorausgesetzt.

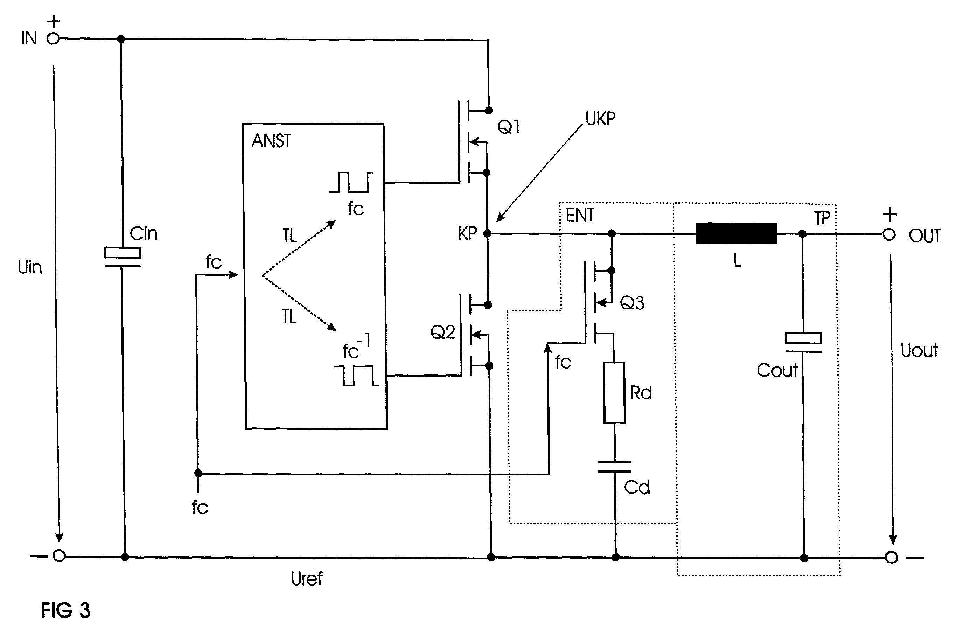

FIG 3 zeigt ein Schaltbeispiel eines erfindungsgemäßen DC/DC-Wandlers mit synchroner Gleichrichtung.
Der erfindungsgemäße DC/DC-Wandler weist vergleichend zum Schaltbeispiel des DC/DC-Wandlers aus FIG 1 einen weiteren Schalter, ebenfalls realisiert durch einen Schalttransistor Q3 des Typs MOSFET, und eine Serienschaltung, bestehend aus einem Widerstand Rd und einem Kondensator Cd, auf. Diese drei Bauelemente bilden eine Entstöreinrichtung ENT.

Dabei ist der dritte Schalttransistor Q3 einerseits mit dem Knotenpunkt KP und andererseits über die Serienschaltung mit dem Referenzpotential Uref verbunden. Der dritte Schalttransistor Q3 wird über seinen Gate-Anschluss derart unmittelbar durch das Steuersignal fc angesteuert, dass er jeweils parallel zum ersten Schalttransistor Q1 durchgeschaltet bzw. gesperrt ist.

Durch die unmittelbare Ansteuerung des dritten Schalttransistors Q3 durch das Steuersignal fc wird der erste Schalttransistor Q1 um die Signallaufzeit TL nach dem durchschalten bzw. sperren des Transistors Q3 durchgeschaltet bzw. gesperrt. Über den Kondensator Cd werden Störungen bzw. ein durch den Schaltvorgang der Schalttransistoren Q1, Q2 entstehendes Überschwingen des am Knotenpunkt KP anliegenden Knotenpunktspotentials UKP minimiert, wodurch gleichfalls Störungen der Ausgangsspannung Uout minimiert werden.

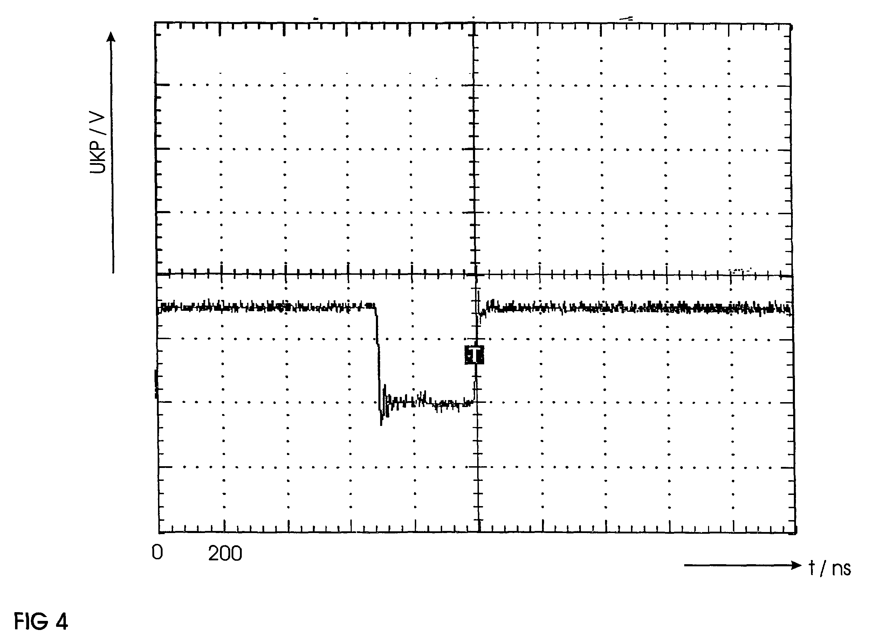

FIG 4 zeigt ein Knotenpunktspotential UKP bzw. einen Spannungsverlauf am Knotenpunkt KP des erfindungsgemäßen, nach FIG 3 ausgebildeten DC/DC-Wandlers.

Vergleichend zu FIG 2 ist ersichtlich, dass beim Durchschalten des ersten Schalttransistors Q1 am Knotenpunkt KP nunmehr nahezu kein Überschwingen mehr feststellbar ist. Dabei wurde wieder eine Eingangsspannung Uin von 40 V, ein Laststrom von ca. 10% eines geforderten Sollwerts und eine typische Tastfrequenz von ca. 300 kHz vorausgesetzt.

## Patentansprüche

1. Anordnung zur Gleichspannungswandlung einer an einem Eingang (IN) anliegenden Eingangsspannung (Uin) in eine an einem Ausgang (OUT) anliegende Ausgangsspannung (Uout), bei der der Eingang (IN) einerseits über einen Eingangskondensator (Cin) und andererseits über eine Serienschaltung eines ersten und eines zweiten Schalters, die an einem gemeinsamen Knotenpunkt (KP) miteinander verbunden sind, an einem Referenzpotential (Uref) anliegt und die beiden Schalter derart ansteuerbar sind, dass am Knotenpunkt (KP) einander abwechselnd entweder die Eingangsspannung (Uin) oder das Referenzpotential (Uref) als Knotenpunktspotential (UKP) angeschaltet ist, und bei der zwischen Knotenpunkt (KP) und Ausgang (OUT) ein Tiefpass (TP) angeordnet ist,
**dadurch gekennzeichnet, dass** der Knotenpunkt (KP) über eine Entstöreinrichtung (ENT) mit dem Referenzpotential (Uref) verbunden ist.

2. Anordnung nach Anspruch 1, **dadurch gekennzeichnet, dass** den beiden Schaltern eine mittels eines Steuersignals (fc) getaktete Ansteuereinrichtung (ANST) vorgeschaltet ist, die aus dem Steuersignal (fc) nach Ablauf einer Signallaufzeit (TL) Ansteuersignale erzeugt, mit deren Hilfe die beiden Schalter einander abwechselnd durchgeschaltet bzw. gesperrt sind.

3. Anordnung nach Anspruch 2, **dadurch gekennzeichnet,**
- **dass** die Entstöreinrichtung (ENT) einen durch das Steuersignal (fc) angesteuerten dritten Schalter und eine Serienschaltung beinhaltet, die einen Widerstand (Rd) und einen Kondensator (Cd) aufweist,
- **dass** der dritte Schalter einerseits mit dem Knotenpunkt (KP) und andererseits über die Serienschaltung mit dem Referenzpotential (Uref) verbunden ist und
- **dass** der dritte Schalter unmittelbar durch das Steuersignal (fc) derart angesteuert ist, dass er jeweils parallel zum ersten Schalter durchgeschaltet bzw. gesperrt ist.

4. Anordnung nach einem der vorhergehenden Ansprüche, **dadurch gekennzeichnet, dass** die Schalter (Q1,Q2,Q3) als Feldeffekt-Transistoren, insbesondere vom Typ MOSFET, ausgebildet sind.

5. Anordnung nach einem der vorhergehenden Ansprüche, **dadurch gekennzeichnet, dass** der Tiefpass (TP) eine serielle Induktivität (L) und in einem Querzweig einen auf das Ausgleichspotential (Uref) geschalteten Ausgangskondensator (Cout) aufweist.

6. Anordnung nach einem der Ansprüche 1 bis 3, **dadurch gekennzeichnet, dass** der zweite Schalter als Diode oder als Parallelschaltung einer Diode zu einem Transistor ausgebildet ist.

7. Oszillator mit einer Anordnung nach einem der vorhergehenden Ansprüche, wobei die Anordnung als Spannungsversorgung dem Oszillator vorgeschaltet ist.

8. Basisstation mit einer Anordnung nach einem der Ansprüche 1 bis 6.

9. Basisstation mit einem Oszillator nach Anspruch 7.
